# EUROPÄISCHE PATENTSCHRIFT

(11) **EP 1 092 945 B1**
(45) Veröffentlichungstag und Bekanntmachung des Hinweises auf die Patenterteilung: **28.12.2005**
(21) Anmeldenummer: 00121933.6
(22) Anmeldetag: 09.10.2000
(51) Int. Cl.: G01B 11/06

(54) **Messgerät und Verfahren zum Vermessen von Strukturen auf Substraten verschiedener Dicke**
Device and method for measurements of structures on substrates of various thicknesses
Dispositif et procédé de mesure des structures sur des substrats des épaisseurs différentes

(30) Priorität: 11.10.1999 DE 19949019
(43) Veröffentlichungstag der Anmeldung: 18.04.2001
(73) Patentinhaber: Leica Microsystems Semiconductor GmbH, 35578 Wetzlar (DE)
(72) Erfinder: Kaczynski, Ulrich, 61231 Bad Nauheim (DE)
(74) Vertreter: Reichert, Werner Franz

(56) Entgegenhaltungen:
- EP-A- 0 940 723
- US-A- 5 786 897

## Beschreibung

Die Erfindung ist in unabhängigen Ansprüchen 1 und 9 definiert.

Die Erfindung betrifft ein Messgerät zum Vermessen von Strukturen auf Substraten verschiedener Dicke, wobei das Messgerät einen XY-Schlitten, in dem eine Aussparung durch einen umlaufenden Rand definiert ist, eine Beleuchtungsoptik und mehrere optische Ausgleichselemente umfasst.

Desweiteren betrifft die Erfindung ein Verfahren zum Vermessen von Strukturen auf Substraten verschiedener Dicke.

Substrate, auch Masken genannt, die im Durchlicht gemessen werden sollen, weisen unterschiedliche Dicken auf. Substrate, die in dem Messgerät vermessen werden können, müssen dem SEMI Standard (SEMI P1-92 © SEMI 1981, 1999) genügen. Einige Beispiel hierfür sind Quarzmasken vom Typ 6025 (6 X 6 Inch und 0,25 Inch dick), Typ 5009 (5 X 5 Inch und 0,09 Inch dick) oder die Quarzmaske mit den Abmessungen 230 X 230 X 9 Millimeter. Die von den Halbleiterherstellern verwendeten standardisierten Dicken sind: 2.3 mm , 3.2 mm, 6.35 mm, und 9 mm. Um identische Messbedingungen (und damit vergleichbare Messergebnisse) für alle Substratdicken zu erhalten, muss die optische Weglänge des Messstrahls durch das Material des Substrats (Quarz) für alle Substratdicken identisch sein. Die Optik wird daher für 9 mm dickes Quarzglas ausgelegt. Werden dünnere Substrate gemessen, werden Ausgleichselemente in den Strahlengang eingeschoben, so dass in der Summe immer eine gleiche optische Weglänge erreicht wird.

Die US-A-5,786,897 offenbart ein Verfahren und eine Vorrichtung zum Bestimmen der Koordinaten von Mustern auf der Oberfläche eines Substrats. Die Vorrichtung besteht aus einem in XY-Richtung bewegbaren Schlitten, auf dem ein transparentes Substrat mit dem zu vermessenden Muster nach unten vorgesehen ist. Eine Detektoreinrichtung ist oberhalb des Substrats angebracht. Für die X-Achse und die Y-Achse sind Interferometer vorgesehen, um damit die Position des Schlittens in der XY-Ebene bestimmen zu können. Um Substrate unterschiedlicher Dicke vermessen zu können, muss ein Kompensationsmittel für den optischen Weg vorgesehen sein. Das Kompensationsmittel besteht aus einer kreisförmigen Platte, in der z.B. vier Glaselemente vorgesehen sind. Entsprechend der Dickenmessung des Substrats wird das geeignete Glaselement durch Drehung der Scheibe in den Strahlengang gebracht. Die Drehung der Scheibe kann mittels eines Motors oder eines Antriebsriemens erfolgen. Bedingt durch der Lage des motorischen Antriebs befindet sich eine Wärmequelle in der Nähe der Messstelle, was zu einer Beeinträchtigung der Reproduzierbarkeit der Messung führt. Desweiteren verursacht die Unterbringung und die Bewegung des Revolvers oder der Schieber einen großen Platzbedarf.

Der Erfindung liegt die Aufgabe zugrunde, zur Vermessung von Strukturen auf Substraten unterschiedlicher Dicke ein Messgerät zu schaffen, das reproduzierbare Messergebnisse liefert und dabei alle im Messbereich des Messgeräts befindlichen Wärmequellen so weit wie möglich reduziert. Ferner soll eine möglichst platzsparende Bauweise erreicht werden.

Die Aufgabe wird gelöst durch ein Messgerät, dadurch gekennzeichnet, dass mehrere Aufbewahrungsfächer für die optischen Ausgleichselemente am umlaufenden Rand der Aussparung des XY-Schlittens ausgeformt sind, und dass jeweils das benötigte optische Ausgleichselement durch die Beleuchtungsoptik aus dem zugeordneten Aufbewahrungsfach entnehmbar ist.

Eine weitere Aufgabe der Erfindung ist es, ein Verfahren zu schaffen, mit dem mehrere optische Ausgleichselemente in den Strahlengang eines Messgeräts zu bringen sind, ohne dass dadurch die Reproduzierbarkeit der Messung beeinflußt wird.

Diese Aufgabe wird erfindungsgemäß dadurch gelöst, dass das Verfahren gekennzeichnet ist durch die folgenden Schritte:
- Bestimmen des für die Vermessung verwendeten Substrattyps,
- Verfahren des XY-Schlittens derart, dass die Beleuchtungsoptik unter einem ausgewählten Ausgleichselement positioniert ist,
- Anheben der Beleuchtungsoptik und dabei Aufnehmen des Ausgleichselements und
- Verfahren des XY-Schlittens in den Messbereich des Substrats und Positionieren der Beleuchtungsoptik zusammen mit dem Ausgleichselement in der Messposition.

Vorteilhafte Weiterbildungen ergeben sich aus den Merkmalen der abhängigen Ansprüche.

Mit der erfindungsgemäßen Ausgestaltung des Messgerätes ist es möglich, reproduzierbare Messergebnisse zu liefern und dabei den störenden Einfluss durch die Motorik für den Wechsel der Ausgleichselemente auszuschalten. Die Ausgleichselemente sind in Aufbewahrungsfächern im Unterbau des XY-Schlittens aufbewahrt. Der Fahrbereich des XY-Schlittens ist größer als der Messbereich im Durchlicht. Der Messbereich entspricht in etwa der Aussparung, die im XY-Schlitten definiert ist. Dadurch ist es für den XY-Schlitten selbst möglich, an die entsprechenden Positionen zu fahren und die Ausgleichselemente aufzunehmen. Um zu verhindern, dass die falschen Ausgleichselemente geladen werden und es damit zu einem Schaden für das Substrat kommen kann (wenn das geladene Ausgleichselement zu dick ist) oder zu Fehlern in der Messgenauigkeit (wenn eine zu dünnes Auugleichselement geladen ist), werden die Ausgleichselemente kodiert. Dazu werden die Formen (Geometrie) so gestaltet, dass immer nur das richtige Ausgleichselement an der entsprechenden Stelle hineinpasst. Zum Anheben des Ausgleichselements wird der Bewegungsmechanismus des Kondensors verwendet. Einen weiteren Vorteil weisst das erfindungsgemäße Verfahren auf, mit dem es möglich ist verschiedene optische Ausgleichselemente in den Strahlengang des Messgeräts zu bringen.

In der Zeichnung ist der Erfindungsgegenstand des Messgerätes schematisch dargestellt und wird anhand der Figuren nachfolgend beschrieben. Dabei zeigen
- Fig. 1:: eine schematische Seitenansicht des Messgerätes,
- Fig. 2:: eine perspektivische Darstellung des XY-Schlittens mit den darin abgelegten Ausgleichselementen,
- Fig. 3:: ein Querschnitt durch ein Ausgleichselement und des Kondensors, um die mechanische Auflage des Ausgleichselements auf dem Kondensor darzustellen,
- Fig. 4:: ein Ausführungsbeispiel für die Ausgestaltung der Aufbewahrungsfächer für die optischen Ausgleichselemente,
- Fig. 5a bis 5c:: eine graphische Darstellung der einzelnen Phasen der Entnahme eines Ausgleichselements aus einem der Aufbewahrungsfächer, und
- Fig. 6:: ein Ablaufdiagramm zur Darstellung des erfindungsgemäßen Verfahrens.

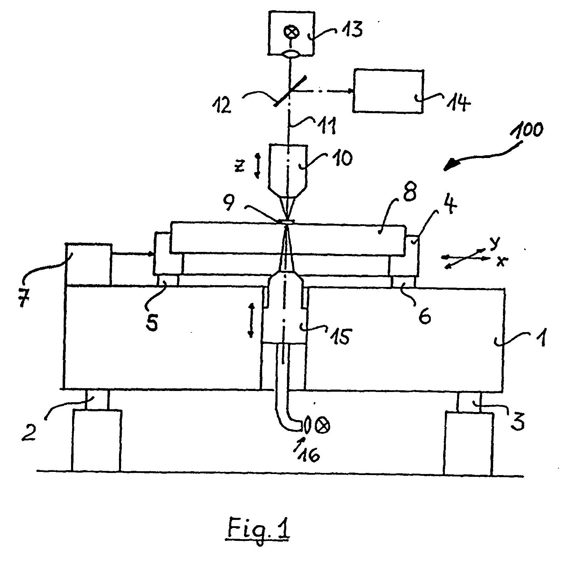

Das in Fig. 1 dargestellte hochgenaue Messgerät 100 besteht aus einem Granitblock 1, der auf Füßen 2, 3 schwingungsgedämpft gelagert ist. Auf dem Granitblock 1 ist ein als Rahmen ausgebildeter XY-Schlitten 4 auf Luftlagern 5, 6 in den zwei durch Pfeile angedeuteten Richtungen gleitend verschiebbar. Der Rahmen des XY-Schlitten 4 besteht vorteilhafterweise aus einer Glaskeramik mit geringem thermischen Ausdehnungskoeffizienten. Die Antriebe dafür sind nicht dargestellt. Die Position des XY-Schlittens 4 wird mit einem Laser-Interferometer-System 7 in X- und Y-Richtung gemessen.

In den Rahmen des XY-Schlitten 4 ist ein Substrat 8 eingelegt. Das Substrat 8 besteht z.B. aus Quarzglas. Auf der Substratoberfläche sind Strukturen 9 aufgebracht. Da der XY-Schlitten 4 als Rahmen ausgebildet ist, kann das Substrat 8 auch von unten her durchleuchtet werden. Bei nicht lichtdurchlässigen Substraten findet dann eine Beleuchtung mit Auflicht Anwendung. Die weitere Beschreibung beschränkt sich auf die Beleuchtung von lichtdurchlässigen Substraten. Dies soll in keiner Weise als eine Beschränkung der Anmeldung aufgefasst werden.

Oberhalb des Substrats 8 befindet sich ein Abbildungssystem 10 hoher optischer Güte, das zur Fokussierung längs seiner optischen Achse 11 in Z-Richtung verstellbar ist. Über einen Teilerspiegel 12 wird zum einen das Licht einer Lichtquelle 13 in den optischen Strahlengang eingeleitet und zum anderen werden die Abbildungsstrahlen auf eine Detektor-Einrichtung 14 gelenkt. Die Detektor-Einrichtung 14 ist z.B. eine CCD-Kamera mit hochauflösendem Pixelarray. Die Lichtquelle 13 emittiert im nahen UV-Spektralbereich.

In den Granitblock 1 ist eine weitere Beleuchtungseinrichtung eingesetzt, die aus einem höhenverstellbaren Kondensor 15 und einer Lichtquelle 16 besteht. Als Lichtquelle 16 kann auch die Austrittsfläche eines Lichtleiters vorgesehen sein. Die optische Achse des Kondensors 15 fluchtet mit der optischen Achse 11 des Abbildungssystems 10. Die Höhenverstellung des Kondensors 15 mit Lichtquelle 16 dient der Anpassung der auf die Struktur 9 zu richtenden Beleuchtungsstrahlen an unterschiedliche optische Dicken von unterschiedlichen Substraten 8. Der Kondensorkopf kann insbesondere in den offenen Teil des Rahmens des XY-Schlittens 4 hineinreichen. Zum Schutz vor Beschädigungen bei Tischverschiebungen über die gesamte Substratfläche kann er unter die Oberfläche des Granitblocks 1 gezogen werden. Die Lichtquellen 13 und 16 sind voneinander unabhängig einschaltbar.

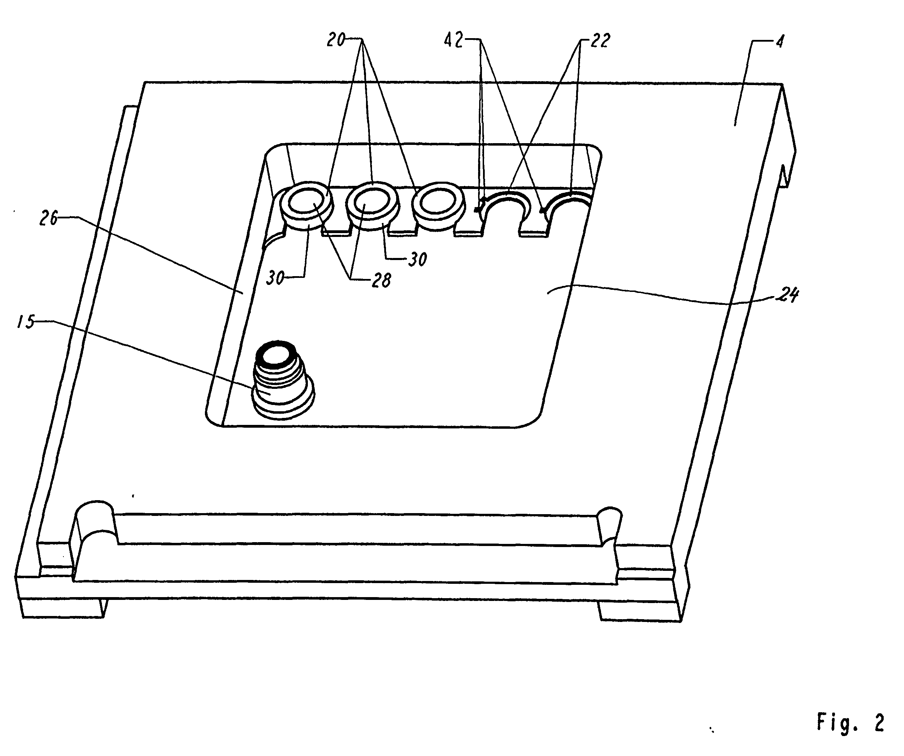

Fig. 2 stellt eine perspektivische Darstellung des XY-Schlittens 4 dar, in dem mehrere Ausgleichselemente 20 in dafür vorgesehenen Aufbewahrungsfächern 22 abgelegt sind. In dieser Darstellung sind mehrere Bauteile des Messgeräts weggelassen, um der Einfachheit halber einen besseren Eindruck vom Erfindungswesentlichen zu bekommen. Im XY-Schlitten 4 ist eine Aussparung 24 ausgebildet, die einen umlaufenden Rand 26 definiert. Die Aufbewahrungsfächer 22 sind entlang des umlaufenden Randes 26 ausgebildet. Im Bereich der Aussparung 24 ist der Kondensor 15 vorgesehen. Der Kondensor ist ortsfest, d.h. er kann nicht in der Bewegungsebene des XY-Schlittens 4 verfahren werden. Der XY-Schlitten 4, der gleichzeitig auch der Messtisch des Messgeräts 100 ist, besitzt einen derart großen Verfahrweg, daß der Kondensor 15 jeden Punkt innerhalb der Aussparung 24 erreichen kann. Die Ausgleichselemente sind aus Glasplättchen 28, die in einer Fassung 30 befestigt sind. Substrate 8, die im Durchlicht gemessen werden, liegen in unterschiedlichen Dicken haben vor. Es treten typischerweise Dicken der Substrate 8 von 2.3 mm , 3.2 mm, 6.35 mm, 9 mm auf (SEMI-Norm). Um identische Messbedingungen (und damit vergleichbare Messergebnisse) für alle Substratdicken zu erhalten, muss die Weglänge des optischen Messstrahls durch das Material des Substrats 8 (Quarz) für alle Substrate identisch sein. Die Beleuchtungsoptik (Kondensor 15) ist daher für das dickste Substrat ausgelegt. Werden dünnere Substrate gemessen, werden Ausgleichselemente in den Strahlengang gebracht, so dass in der Summe immer die gleiche optische Weglänge durch das Substrat erreicht wird.

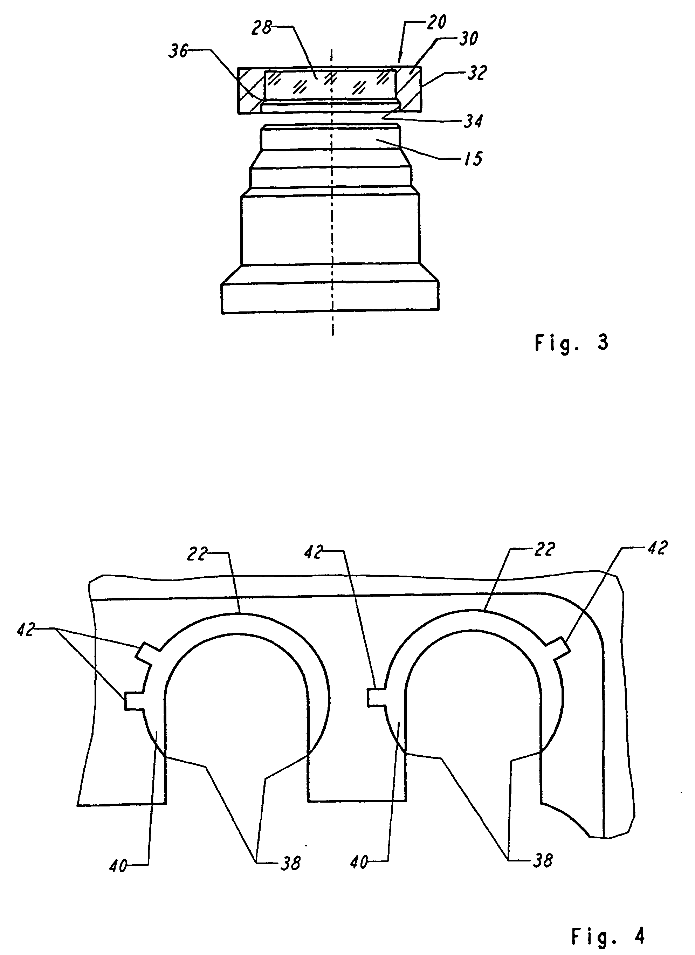

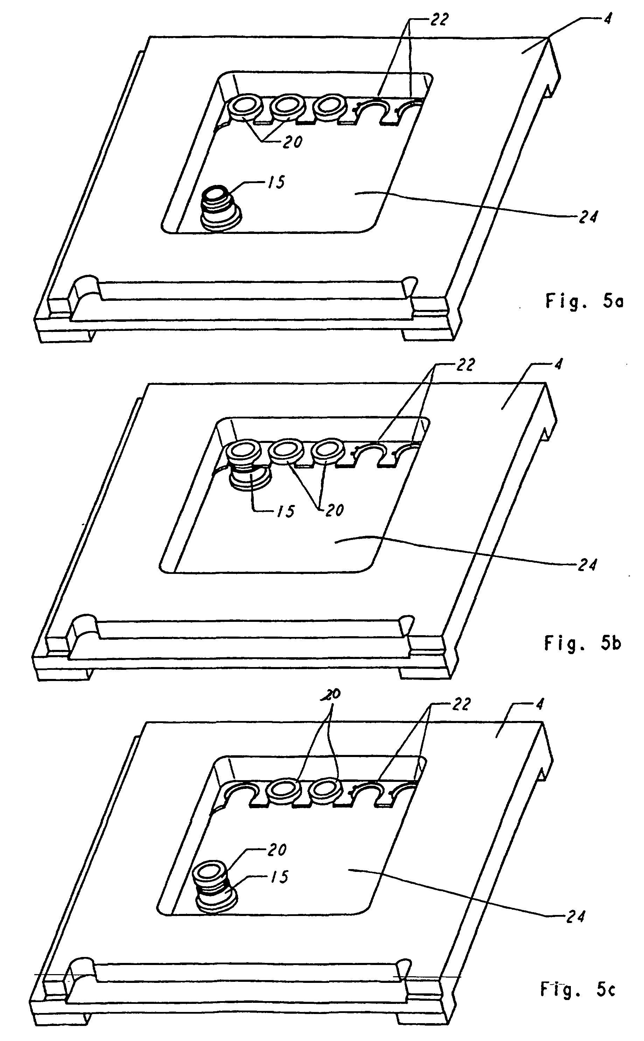

Fig. 3 zeigt einen Querschnitt durch ein Ausgleichselement 20 und den Kondensor 15, um die mechanische Auflage des Ausgleichselements 20 auf dem Kondensor 15 darzustellen. Der Kondensor 15 wird benutzt, um die Ausgleichselemente 20 aus deren Aufbewahrungsfächern zu entnehmen (Fig. 5a bis 5c liefert hierzu eine genaue Beschreibung). Die Glasplättchen 28 sind in einer Fassung 30 befestigt. Die Fassung 30 hat die Form eines Hohlzylinders mit einer Außenwand 32 und einer Innenwand 34. An der Innenwand 34 ist ein umlaufender Rand 36 ausgebildet, auf der das Glasplättchen 28 ruht und befestigt ist. Der Innendurchmesser der Fassung 30 ist derart bemessen, dass er etwas größer ist als der Außendurchmesser des Kondensors 15. Ferner ist an der Innenwand 34 der Fassung 30 ein Profil ausgebildet, die einen sicheren und zentrierten Sitz des Ausgleichselements 20 auf dem Kondensor 15 gewährleistet.

Fig. 4 zeigt ein Ausführungsbeispiel für die Ausgestaltung der Aufbewahrungsfächer 22 für die optischen Ausgleichselemente 20. Die Aufbewahrungsfächer 22 sind kreisförmig ausgestaltet. Eine Verjüngung 38 der Aufbewahrungsfächer 22 in Richtung der Aussparung 24 des XY-Schlittens liegt vor. Die Verjüngung 38 sichert die Ausgleichselemente 20 gegen ein Herausfallen aus den Aufbewahrungsfächern 22. Entlang des Randes der Aufbewahrungsfächer 22 ist eine Auflagefläche 40 ausgeformt, die das Ausgleichselement 20 trägt. Um zu gewährleisten, dass immer die gleichen Ausgleichselemente 20 in die gleichen Aufbewahrungsfächer 22 abgelegt werden, ist an den Ausgleichselementen 20 eine Kodierung angebracht. Im vorliegenden Ausführungsbeispiel ist die Kodierung mechanisch. Hierzu sind dann z.B. an den Aufbewahrungsfächern 22 Nuten 42 ausgebildet. Die Anordnung bzw. die Verteilung der Nuten ist von Aufbewahrungsfach 22 zu Aufbewahrungsfach 22 unterschiedlich. Eine Kodierung ist ebenfalls am Ausgleichselement 20 vorgesehen, so dass eine richtige Zuordnung gewährleistet ist. Es ist selbstverständlich, dass die hier vorgestellte Ausgestaltung der Kodierung in keinster Weise als eine Beschränkung aufzufassen ist.

Die Entnahme eines Ausgleichselements 20 ist in den Fign. 5a bis 5c dargestellt. Wie in Fig. 5a dargestellt, sind die Ausgleichselemente 20 in den dafür vorgesehenen Aufbewahrungsfächern 22 abgelegt. Der Kondensor 15 befindet sich im Bereich der Aussparung 24 des XY-Schlittens 4. Wird aufgrund der Dicke des zu vermessenden Substrats ein Ausgleichselement 20 benötigt (siehe Fig. 5b), fährt der XY-Schlitten 4 derart, dass der Kondensor 15 unter dem Aufbewahrungsfach 22 des benötigten Ausgleichselements 20 positioniert wird.

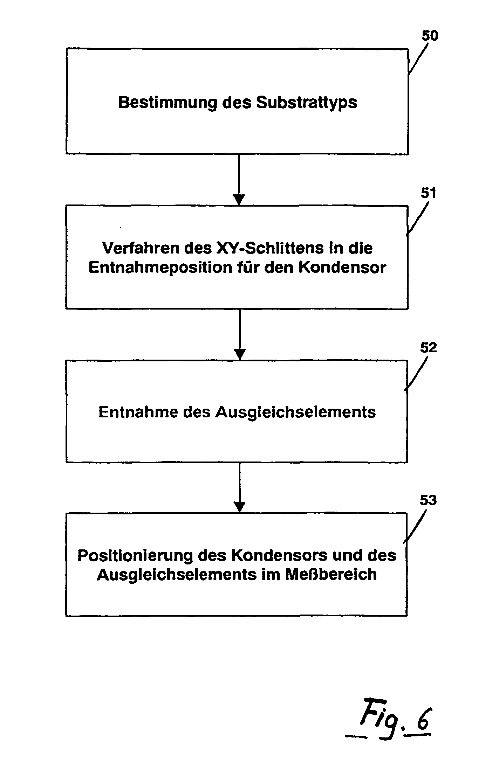

Der Kondensor 15 wird in Z-Richtung (senkrecht zur Bewegungsebene des XY-Schlittens 4) angehoben, wodurch das Ausgleichselement 20 vom Aufbewahrungsfach 22 abgehoben wird. In Fig. 5c wird, wenn das Ausgleichselement 20 auf dem Kondensor 15 ruht, der XY-Schlitten derart verfahren, das die Einheit aus Kondensor 15 mit Ausgleichselement 20 vom Aufbewahrungsfach 22 entfernt ist. Die Einheit aus Kondensor 15 mit Ausgleichselement 20 befindet sich dann im Bereich der Aussparung 24. Fig. 6 stellt ein Ablaufdiagramm zur Durchführung des erfindungsgemäßen Verfahrens dar. In einem ersten Schritt 50 wird das Substrats bestimmt, das für die Vermessung verwendet wird. Die Messergebnisse von Sensoren (nicht dargestellt) können hierzu die notwendige Information liefern. Ist bekannt, welcher Substrattyp gerade vermessen werden soll, wird mittels dieser Information der XY-Schlittens 4 derart verfahren, dass das zum Substrat 8 passende Ausgleichselement 20 entnommen wird. Der XY-Schlittens 4 fährt an die Position jenes Aufbewahrungsfachs 22, in dem sich das entsprechende Ausgleichselement 20 befindet, so dass der Kondensor 15 genau unter dem Ausgleichselement 20 positioniert ist. In einem weiteren Schritt 52 wird der Kondensor 15 angehoben. Die Bewegung des Kondensors 15 ist senkrecht zur Bewegungsebene des XY-Schlittens 4. Das Ausgleichselement 20 wird dabei aus seinem Aufbewahrungsfach 22 angehoben und kommt auf dem Kondensor 15 zu liegen. In einem folgenden Schritt 53 verfährt der XY-Schlitten 4 in den Messbereich des Substrats 8. Dabei wird der Kondensor 15 zusammen mit dem Ausgleichselement 20 von dem Aufbewahrungsfach 22 wegbewegt und in der Messposition positioniert. Der Kondensor 15 zusammen mit dem Ausgleichselement 20 befindet sich dabei im Bereich des Aussparung 24 des XY-Schlittens 4.

### Bezugsziffernliste

- 1: Granitblock
- 2: Fuß
- 3: Fuß
- 4: XY-Schlitten
- 5: Luftlager
- 6: Luftlager
- 7: Laser-Interferometer
- 8: Substrat
- 9: Strukturen
- 10: Abbildungssystem
- 11: optische Achse
- 12: Teilerspiegel
- 13: Lichtquelle
- 14: Detektor-Einrichtung.
- 15: höhenverstellbarer Kondensor
- 16: Lichtquelle
- 20: Ausgleichselemente
- 22: Aufbewahrungsfächer
- 24: Aussparung
- 26: umlaufender Rand
- 28: Glasplättchen
- 30: Fassung
- 32: Außenwand
- 34: Innenwand
- 36: umlaufende Nase
- 38: Verjüngung
- 40: Auflagefläche
- 42: Nuten
- 50: erster Schritt
- 51: zweiter Schritt
- 52: dritter Schritt
- 53: vierter Schritt
- 100: Messgerät

## Patentansprüche

1. Messgerät (100) zum Vermessen von Strukturen (9) auf Substraten (8) verschiedener Dicke, das einen XY-Schlitten (4), in dem eine Aussparung (24) durch einen umlaufenden Rand (26) definiert ist, eine Beleuchtungsoptik (15) und mehrere optische Ausgleichselemente (20) umfasst
**dadurch gekennzeichnet, dass**
mehrere Aufbewahrungsfächer (22) für die optischen Ausgleichselemente (20) am umlaufenden Rand (26) der Aussparung (24) des XY-Schlittens (4) ausgeformt sind, und dass jeweils das benötigte optische Ausgleichselement (20) durch die Beleuchtungsoptik (15) aus dem zugeordneten Aufbewahrungsfach (22) entnehmbar ist.

2. Messgerät nach Anspruch 1,wobei
der XY-Schlitten (4) gleichfalls als Messtisch für die Vermessung der Substrate (8) verwendbar ist.

3. Messgerät nach Anspruch 1, wobei
die Beleuchtungsoptik (15) aus einem Kondensor besteht, der durch einen Bewegungsmechanismus senkrecht zur Bewegungsrichtung des XY-Schlittens (4) verstellbar ist, und dass der XY-Schlitten (4) die Aufbewahrungsfächer (22) mit den optischen Ausgleichselementen (20) in eine Entnahmeposition fährt.

4. Messgerät nach Anspruch 1, wobei
die Aufbewahrungsfächer (22) derart ausgebildet sind, dass die Ausgleichselemente (20) formschlüsssig in den Aufbewahrungsfächern (22) liegen.

5. Messgerät nach Anspruch 4, wobei
die Ausgleichselemente (20) mit einer Kodierung versehen sind.

6. Messgerät nach Anspruch 1, wobei
die Aufbewahrungsfächer (22) für die Ausgleichselemente linear entlang des Randes (26) der Aussparung (24) angeordnet sind.

7. Messgerät nach Anspruch 1, wobei
jedes entnommene Ausgleichselement (20) auf dem Kondensor (15) aufliegt.

8. Verfahren zum Vermessen von Strukturen (9) auf Substraten (8) verschiedener Dicke **gekennzeichnet durch** die folgenden Schritte:
- Bestimmen des für die Vermessung verwendeten Substrattyps (8),
- Verfahren eines XY-Schlittens (4) derart, daß eine Beleuchtungsoptik (15) unter einem ausgewählten Ausgleichselement (20) positioniert ist,
- Anheben der Beleuchtungsoptik (15) und dabei Aufnehmen des Ausgleichselements (20) und
- Verfahren des XY-Schlittens (4) in den Messbereich des Substrats (8) und Positionieren der Beleuchtungsoptik (15) zusammen mit dem Ausgleichselement (20) in der Messposition.

9. Verfahren nach Anspruch 8, wobei
nachdem der Substrattyp für die Vermessung bestimmt wurde, das für die Kompensation der optischen Weglänge benötigte Ausgleichselement (20) ausgewählt wird, und dass die Lage des ausgewählten Ausgleichselements (20) im Aufbewahrungsfach (22) bestimmt wird.

10. Verfahren nach Anspruch 8, wobei
die Bestimmung des verwendeten Substrattyps aufgrund von Messergebnissen von Sensoren erfolgt und dass **dadurch** der Antrieb des XY-Schlittens (4) derart gesteuert wird, dass das zum Substrat (8) passende Ausgleichselement (20) entnommen wird.

## Claims

1. Measuring instrument (100) for measuring patterns (9) on substrates (8) of various thicknesses, which comprises an X-Y carriage (4) in which an opening (24) is defined by a peripheral rim (26), an illumination optical system (15), and multiple optical compensation elements (20), **characterized in that** multiple storage compartments (22) for the optical compensation elements (20) are shaped on the peripheral rim (26) of the opening (24) of the X-Y carriage (4), and **in that** the optical compensation element (20) needed in each case can be removed by the illumination optical system (15) from the associated storage compartment (22).

2. Measuring instrument according to Claim 1, wherein the X-Y carriage (4) is simultaneously usable as a measurement stage for measuring the substrates (8).

3. Measuring instrument according to Claim 1, wherein the illumination optical system (15) comprises a condenser that is adjustable by a movement mechanism perpendicular to the movement direction of the X-Y carriage (4), and in that the X-Y carriage (4) moves the storage compartments (22) with the optical compensation elements (20) into a removal position.

4. The measuring instrument according to Claim 1, wherein the storage compartments (22) are configured such that the compensation elements (20) lie conformingly in the storage compartments (22).

5. Measuring instrument according to Claim 4, wherein the compensation elements (20) are equipped with a code.

6. Measuring instrument according to Claim 1, wherein the storage compartments (22) for the compensation elements are arranged linearly along the rim (26) of the opening (24).

7. Measuring instrument according to Claim 1, wherein each removed compensation element (20) rests on the condenser (15).

8. Method for measuring patterns (9) on substrates (8) of various thicknesses, **characterized by** the following steps:
- determining the substrate type (8) used for the measurement;
- displacing an X-Y carriage (4) in such a way that an illumination optical system (15) is positioned beneath the selected compensation element (20);
- raising the illumination optical system (15) and thereby picking up the compensation element (20); and
- displacing the X-Y carriage (4) into the measurement region of the substrate (8) and positioning the illumination optical system (15), together with the compensation element (20), in the measurement position.

9. Method according to Claim 8, wherein once the substrate type for the measurement has been determined, the compensation element (20) necessary for compensation for the optical path length is selected, and in that the position of the selected compensation element (20) in the storage compartment (22) is determined.

10. Method according to Claim 8, wherein the determination of the substrate type used is accomplished on the basis of measurement results of sensors, and in that the drive system of the X-Y carriage (4) is thereby controlled in such a way that the compensation element (20) matching the substrate (8) is removed.

## Revendications

1. Appareil de mesure (100) pour mesurer des structures (9) sur des substrats (8) d'épaisseurs différentes, qui comprend un chariot XY (4) dans lequel un creux (24) est défini par un bord (26) périphérique, une optique d'éclairage (15) et plusieurs éléments de compensation optiques (20), **caractérisé en ce que** plusieurs compartiments de dépôt (22) pour les éléments de compensation optiques (20) sont façonnés sur le bord périphérique (26) du creux (24) du chariot XY (4) et que l'élément de compensation optique (20) nécessaire peut à chaque fois être prélevé du compartiment de dépôt (22) associé par l'optique d'éclairage (15).

2. Appareil de mesure selon la revendication 1, le chariot XY (4) pouvant en même temps être utilisé comme table de mesure pour la mesure du substrat (8).

3. Appareil de mesure selon la revendication 1, l'optique d'éclairage (15) étant constituée d'un condenseur qui peut être positionné par un mécanisme de déplacement perpendiculairement au sens de déplacement du chariot XY (4) et que le chariot XY (4) amène les compartiments de dépôt (22) muni des éléments de compensation optiques (20) dans une position de prélèvement.

4. Appareil de mesure selon la revendication 1, les compartiments de dépôt (22) étant configurés de telle sorte que les éléments de compensation (20) reposent par engagement géométrique dans les compartiments de dépôt (22).

5. Appareil de mesure selon la revendication 1, les éléments de compensation (20) étant munis d'un codage.

6. Appareil de mesure selon la revendication 1, les compartiments de dépôt (22) pour les éléments de compensation étant disposés de manière linéaire le long du bord (26) du creux (24).

7. Appareil de mesure selon la revendication 1, chaque élément de compensation (20) prélevé reposant sur le condenseur (15).

8. Procédé pour mesurer des structures (9) sur des substrats (8) d'épaisseurs différentes, **caractérisé par** les étapes suivantes :
- Détermination du type de substrat (8) utilisé pour la mesure,
- Déplacement d'un chariot XY (4) de telle sorte qu'une optique d'éclairage (15) soit positionnée sous un élément de compensation (20) sélectionné,
- Levage de l'optique d'éclairage (15) et ainsi prélèvement de l'élément de compensation (20) et
- Déplacement du chariot XY (4) dans la zone de mesure du substrat (8) et positionnement de l'optique d'éclairage (15) conjointement avec l'élément de compensation (20) en position de mesure.

9. Procédé selon la revendication 8, l'élément de compensation (20) nécessaire pour la compensation de la longueur d'onde optique étant sélectionné après avoir déterminé le type de substrat pour la mesure, et que la position de l'élément de compensation (20) sélectionné dans le compartiment de dépôt (22) est déterminée.

10. Procédé selon la revendication 8, la détermination du type de substrat utilisé étant réalisée sur la base des résultats de la mesure des capteurs et que l'entraînement du chariot XY (4) est ainsi commandé de manière à prélever l'élément de compensation (20) adapté au substrat (8).
